# EUROPEAN PATENT APPLICATION

(11) **EP 1 346 786 A2**
(43) Date of publication of application: **24.09.2003**
(21) Application number: 03004924.1
(22) Date of filing: 07.03.2003
(51) Int. Cl.: B23B 13/02

(54) **Bar feeder for feeding machine tools**

(30) Priority: 20.03.2002 IT BO20020134
(71) Applicant: IEMCA Giuliani Macchine Italia S.p.A., 48018 Faenza (Ravenna) (IT)
(72) Inventor: Melandri, Pierantonio, 48018 Faenza, (Prov. of Ravenna) (IT); Drei, Andrea, 48018 Faenza, (Prov. of Ravenna) (IT)
(74) Representative: Modiano, Guido, Dr.-Ing.

(57) **Abstract**

A bar feeder (1) for feeding a machine tool, comprising at least one guide (8,9) that forms a channel along which the bar (B) to be fed is made to advance by way of a bar pusher (12) connected, through a bridge (13,14), to a carriage (16) that is guided parallel to the channel and is actuated by a linear electric motor (29,31/29,32,37/29,39).

## Description

The present invention relates to a bar feeder for feeding machine tools, particularly for automatic lathes.

Known bar feeders for machine tools, particularly the ones having the most common structure for feeding bars to be machined in automatic lathes, consist of a pair of mutually articulated half-shells that are superimposed longitudinally and have opposite semicylindrical cavities. By way of suitable actuators, the half-shells are actuated between a spaced or open position, to allow the insertion of a bar to be machined in the cavities of a half-shell, and a mating or closed position, in which the cavities of the two half-shells integrate each other in order to form a channel along which the bar is pushed toward the machine tool.

In known feeders of the above type, the advancement of the bar along the guiding channel is usually provided by means of a suitable pusher (known as bar pusher), which is connected to an actuation chain that runs outside the channel through of a bridge. The bridge is constituted by a plate which, during the advancement of the bar pusher, moves between the contiguous edges that delimit the bar guiding channel on the longitudinal opening side.

In order to allow the passage of the bridge, the contiguous edges of the channel must be spaced by at least the thickness of the bridge. In this manner, the guiding channel, even in the position in which the half-shells are closed, is open longitudinally through a slot.

Conventional bar pusher actuation systems suffer certain drawbacks that substantially consist in excessive plays, which reduce the positioning precision of the bar and can cause considerable noise.

The aim of the present invention is to provide a bar feeder that allows to obviate the cited shortcomings of known feeders.

Within this aim, an object of the present invention is to provide a feeder that has a high dynamic performance and can allow synchronization with the lathe.

This aim and this object are both achieved with a bar feeder for feeding a machine tool, comprising at least one guide that forms a channel along which the bar to be fed is made to advance by way of a bar pusher, characterized in that said bar pusher is connected, through a bridge, to a carriage that is guided parallel to said channel and is actuated by means of a linear electric motor.

Further characteristics and advantages of the invention will become better apparent from the following description of some preferred but not exclusive embodiments thereof, illustrated only by way of non-limitative example in the accompanying drawings, wherein:
Figure 1 is a perspective view, with some parts removed, of a portion of the feeder and of the bar feeding surface according to a first embodiment;
Figure 2 is a view of the feeder of Figure 1 after removing the bar feeding surface;
Figure 3 is a view of the feeder of Figure 1 after removing the panels of the lateral housing;
Figure 4 is an axial view of the feeder of the preceding figures;
Figure 5 is a perspective view of the feeder according to a second embodiment;
Figure 6 is an axial view of the feeder of Figure 5;
Figure 7 is an axial view of the feeder according to a third embodiment; and finally
Figure 8 is an axial view of the feeder of Figure 7.

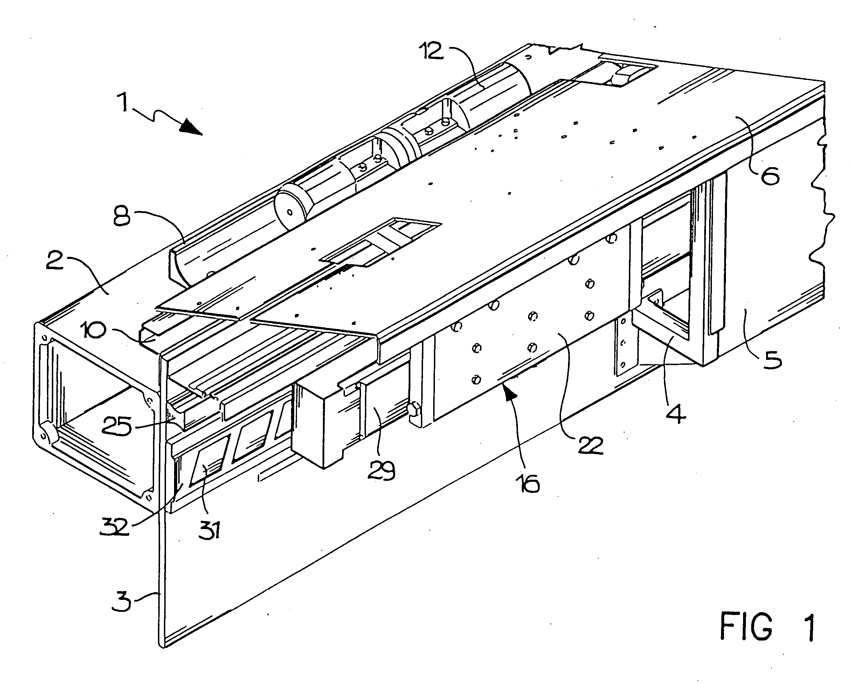

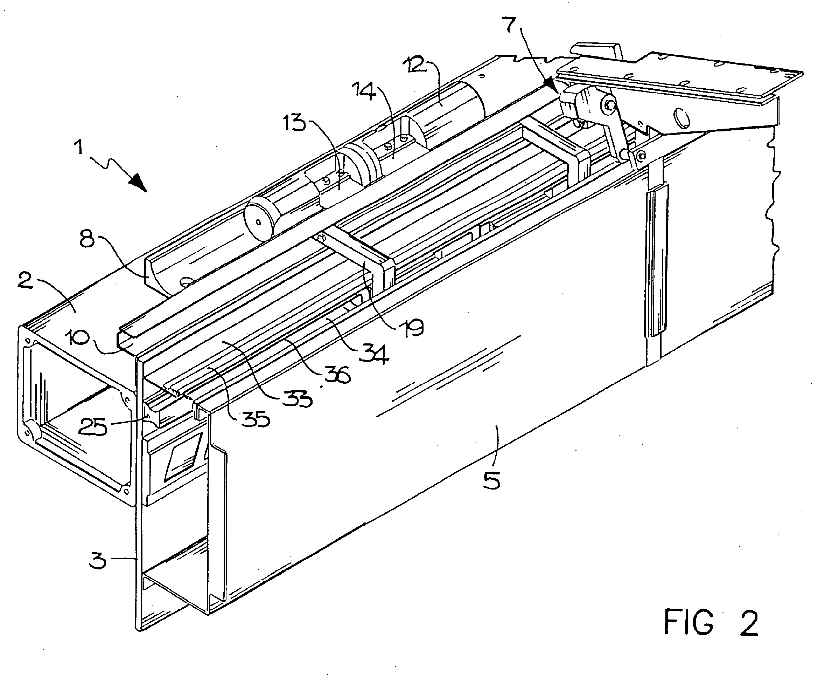

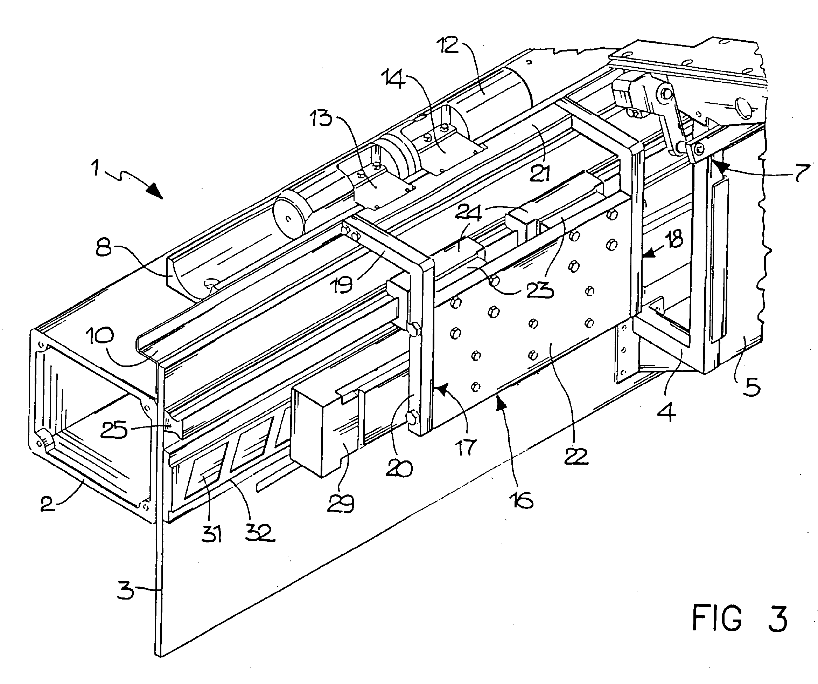

With reference to Figures 1 to 4, reference numeral 1 generally designates the feeder for feeding a machine tool. The feeder 1 is composed of a frame that consists of a tubular beam 2 that has a rectangular cross-section and lies horizontally between two heads that are rigidly coupled thereto at the opposite ends.

A side wall 3 is fixed to the beam 2, and posts 4 are fixed thereto in a cantilevered fashion in order to support panels 5 that form the lateral housing of the feeder.

The posts 4 are shaped so as to form a right angle and have, at their top, an inclined surface 6 that constitutes the magazine from which the bars B are taken individually to be inserted in the guide of the feeder. Pick-up is performed by a singling lever system 7, which is not described in detail since it is fully conventional and does not relate to the present invention.

The guide of the feeder can be of various kinds. In the described example, it is assumed that it is composed of two superimposed half-shells 8 and 9; the lower one 8 is fixed in a cantilevered fashion to the upper edge of the wall 3, which protrudes from the beam 2, by means of a profiled element 10. The half-shells 8 and 9 have mutually opposite cavities that form the channel 11 for guiding a bar toward the machine tool.

The upper half-shell 9 is articulated to the lower half-shell 8 so that the edges of the two half-shells that are directed toward the loading surface 6 can be spaced or open in order to allow the insertion of a bar B in the channel 11 and then moved closer one another in order to close the channel and keep the bar guided during its advancement toward the machine tool.

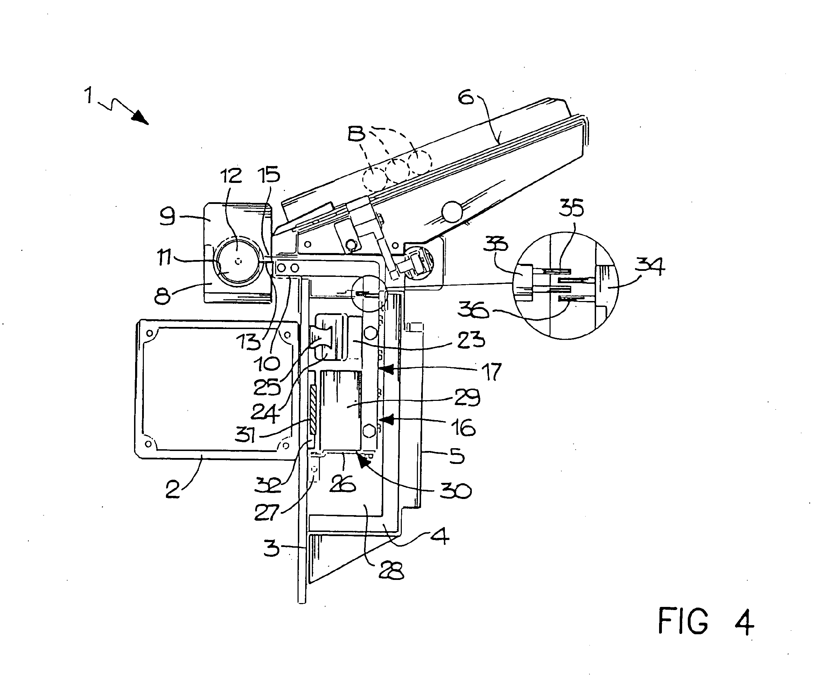

For the advancement of the bar in the channel 11 there is a bar pusher 12, which is actuated by means that are external to the guide, to which it is connected by means of a pair of bridges 13 and 14. In order to allow the passage of the bridges 13 and 14, the openable edges of the half-shells remain in any case spaced, in the guide closure position, by a slot 15 whose gap is wider than the bridges are thick. In Figure 4, the slot 15 is enlarged for the sake of clarity.

The ends of the bridges 13 and 14 that are external to the half-shells are rigidly coupled to a carriage, generally designated by the reference numeral 16, which is composed of two L-shaped brackets 17 and 18, with a first arm 19 that lies horizontally above the upper edge of the wall 3 and the profiled element 10 and a second arm 20 that runs vertically downward from the end of the first arm 19.

The horizontal arms 19 and 20 are connected by a rod 21 for coupling the bridges 13 and 14 and respectively by a plate 22 that is flat and parallel to the wall 3.

Two sliders 24 are rigidly coupled, with suitable spacer blocks 23 interposed, to the plate 22 in its upper part and are provided with grooves for slidingly engaging a horizontal rail 25 that has a dovetail cross-section and is fixed to the wall 3.

As shown more clearly by the axial view of Figure 4, the carriage 16 is provided in a lower region with additional arms 26 that extend toward the wall 3 and support additional sliders 27 for resting slidingly on said wall 3.

The dimensions of the carriage 16 are such that it can slide in the axial compartment 28 comprised between the wall 3 and the housing 5.

The armature winding 29 (also known as stator) of a linear motor 30 for moving the carriage 16 along the rail 25 is fixed to the wall 22 under the sliders 24.

The inductor elements of the linear motor 30 that cooperate with the winding 29 are constituted by magnets forming an inductor bar 31, distributed on a first bar 32 (also known as magnetic track), which is fixed to the wall 3 below and horizontally with respect to the rail 25 in front of said winding 29.

Operation of the described feeder is fully evident from the description given. In particular, the characteristics of the linear motor 30 ensure a uniform advancement of the carriage 16 and of the bar pusher 12 and therefore a constant and progressive thrust on the bar to be fed into the lathe.

It should be noted that the guiding of the carriage 16 provided by the sliders 24 on the rail and by the sliders 27 on the wall 3 ensures a constant gap between the stator 29 and the magnets 31 distributed on the first bar 32 over the entire stroke of the carriage 16.

Furthermore, the linear motor is capable of providing a precise dynamic response that allows perfect synchronization with the operating steps of the lathe.

Advantageously, in order to protect the sliding guides of the carriage and the gap region against the penetration of dirt that might compromise the efficiency of the linear motor, a barrier that closes the compartment 28 in an upward region is arranged above the sliders 24.

Said barrier is constituted by a first strip 33, which is fixed to the top of the wall 3, and by a second strip 34, which is fixed to the top of the posts 4. The two strips 33, 34 protrude longitudinally toward each other and support respectively, along their opposite edges, a double brush 35 and a single or double brush 36, whose upper bristles engage between the bristles of the double brush 35. The bristles 35 and 36, together with the strips 33 and 34, therefore form a seal of the compartment 28 that however allows the passage of the vertical arms 20 of the brackets 17 and 18 of the carriage 16.

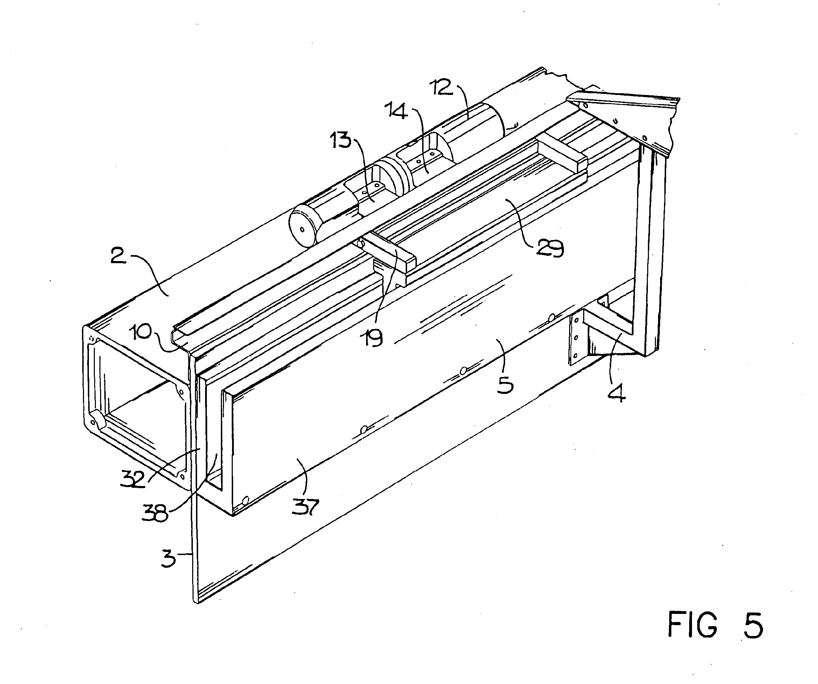

The invention is susceptible of numerous modifications and variations, shown in Figures 5, 6, 7 and 8, in which the elements and parts that are equal or equivalent to those of the feeder described above are designated by the same reference numerals.

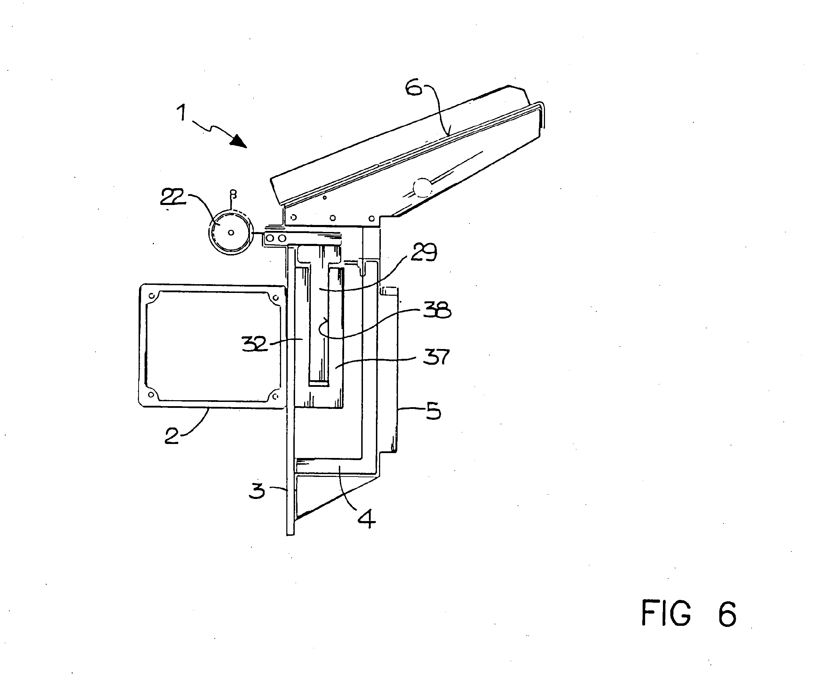

In particular, Figures 5 and 6 illustrate a feeder in which the linear motor comprises a second magnetic track, composed of a second bar 37 provided with permanent magnets. The second bar 37 is arranged opposite the first bar 32 and is rigidly coupled thereto, so as to form an interspace 38 along which the stator 29, supported by the arms 19 of the brackets 17 and 18, moves.

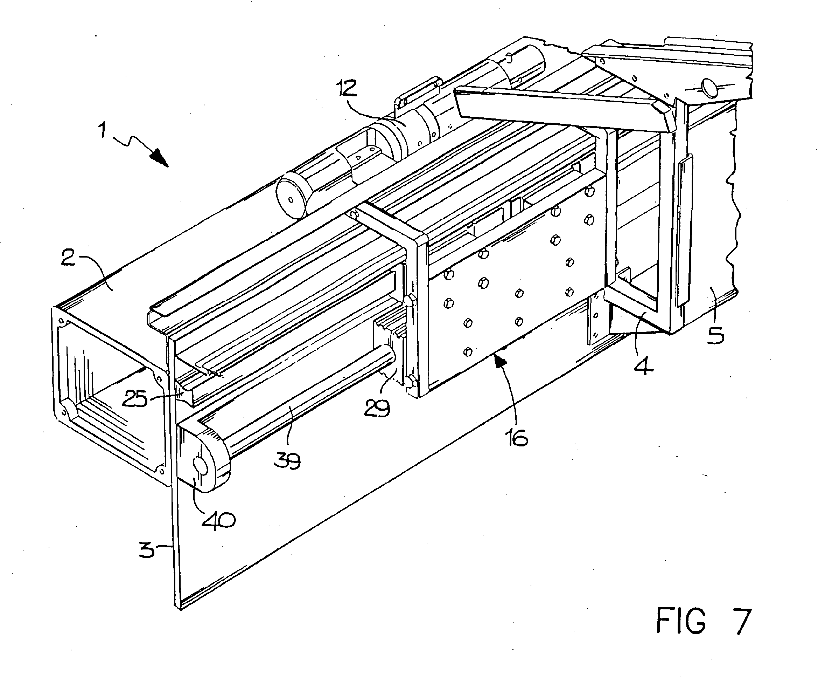

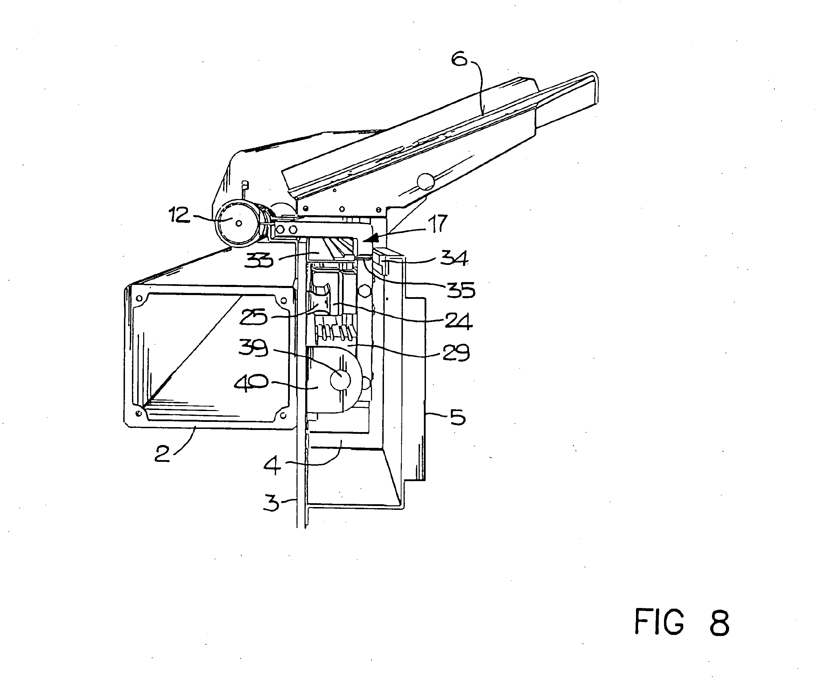

Figures 7 and 8 illustrate a third embodiment, in which the stator 29 is of the tubular type and is crossed by a longitudinal bar 39, which constitutes the inductor of the linear motor. The opposite ends of the bar 39 are rigidly coupled to supports 40 which are rigidly coupled to the wall 3. In order to reduce the bending angle of the bar 39, which due to the length of the feeder can assume significant values, so-called retractable supports, i.e., supports adapted to allow the passage of the stator 29 during the forward and return strokes of the carriage while continuing to support said carriage upstream and downstream, are used.

The disclosures in Italian Patent Application No. BO2002A000134 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A bar feeder for feeding a machine tool, comprising at least one guide that forms a channel (11) along which the bar (B) to be fed is made to advance by way of a bar pusher (12), **characterized in that** said bar pusher (12) is connected, through a bridge (13, 14), to a carriage (16) that is guided parallel to said channel (11) and is actuated by means of a linear electric motor (30).

2. The feeder according to claim 1, **characterized in that** said bar guide is composed of two elements (8, 9) that can move with respect to each other between an open position, which allows the insertion of a bar (B) therebetween, and an adjacent position, at which said elements (8, 9) form a longitudinal channel (11) along which a bar (B) to be fed to the machine tool is made to advance by means of a bar pusher (12), further **characterized in that** said bar pusher (12) is connected, by means of a bridge (13, 14) driven through regions (15) for the coupling of said elements, to a carriage (16), which is guided parallel to said channel and is actuated by means of a linear electric motor (30).

3. The feeder according to claims 1 and 2, **characterized in that** said carriage (16) can slide on rail means (25), which are fixed to the frame of the feeder, and **in that** the armature winding (29) of said linear motor (30) is mounted thereon, the inductor elements (21) of said motor being distributed on a bar (32) that is rigidly coupled to said frame.

4. The feeder according to claim 3, **characterized in that** said armature winding (29) is tubular and said inductor elements (31) are provided in the form of a bar (31) that is fixed in front of said armature winding.

5. The feeder according to claim 3, **characterized in that** said inductor elements (31) are distributed on two opposite bars (32, 37), so as to form an interspace (38) along which said armature winding (29) moves.

6. The feeder according to one of claims 2 to 5, **characterized in that** said frame comprises a wall (3) to which posts (4) for supporting a housing (5) are rigidly coupled, said housing forming a compartment (28) in which said carriage (16) moves.

7. The feeder according to claim 6, **characterized in that** said compartment (28) is closed by a barrier (33-36) that allows the passage of said carriage (16).

8. The feeder according to claim 7, **characterized in that** said barrier is constituted by a first brush (35), which is fixed to said wall (3), and by a second brush (36), which is fixed to said housing (5) so that the bristles of one brush penetrate between the bristles of the other brush.
